# FASCICULE DE BREVET EUROPEEN

(11) **EP 2 373 505 B1**
(45) Date de publication et mention de la délivrance du brevet: **16.09.2015**
(21) Numéro de dépôt: 09763953.8
(22) Date de dépôt: 02.12.2009
(51) Int. Cl.: B60C 11/13, B60C 19/00

(54) **DISPOSITIF ATTENUATEUR DE BRUIT POUR BANDE DE ROULEMENT**
GERÄUSCHDÄMPFUNGSVORRICHTUNG FÜR LAUFFLÄCHE
NOISE ATTENUATOR DEVICE FOR TREAD

(30) Priorité: 05.12.2008 FR 0858305
(43) Date de publication de la demande: 12.10.2011
(73) Titulaire: COMPAGNIE GENERALE DES ETABLISSEMENTS MICHELIN, 63000 Clermont-Ferrand (FR); MICHELIN Recherche et Technique S.A., 1763 Granges-Paccot (CH)
(72) Inventeur: DAUTREY, Nicolas, F-63400 Chamalières (FR)
(74) Mandataire: Diernaz, Christian
(86) Numéro de dépôt international: PCT/EP2009/066212
(87) Numéro de publication internationale: WO 2010/063749

(56) Documents cités:
- EP-A- 0 391 600
- DE-A1- 4 403 662
- GB-A- 2 008 043
- JP-A- 5 155 203
- JP-A- 9 058 217

## Description

Le domaine de l'invention concerne les bandes de roulement de pneu et plus particulièrement les sculptures de ces bandes de roulement.

Pour atteindre des performances indispensables en tenue de route et en adhérence, il est connu de pourvoir une bande de roulement pour pneu avec une pluralité de rainures d'orientation générale circonférentielle (ou longitudinale). Une rainure est délimitée par des parois en vis-à-vis distantes d'une distance au moins supérieure à 2 mm, ces parois pouvant être planes ou bien ondulées ou encore en zigzag. Ces parois latérales sont réunies par une paroi de fond. Lors du roulage, une rainure est fermée par le contact avec la chaussée et il se forme deux extrémités permettant à un fluide de s'écouler à l'intérieur de ladite rainure.

Il a été constaté qu'à certaines vitesses de roulage, l'écoulement de l'air dans les rainures circonférentielles pouvait générer des bruits de résonance qui augmentent le niveau sonore perçu. Il est connu de disposer dans ces rainures des sortes de clapets qui réduisent la longueur du tuyau de résonance dans le contact avec la chaussée. L'art antérieur comprend notamment les documents DE4403662A1 et JP9058217A qui divulguent des pneus selon le préambule de la revendication principale.

Si ce dispositif est efficace, il n'en demeure pas moins que ces éléments peuvent perturber les écoulements de liquide dans la rainure notamment lors de roulage sur sol revêtu d'eau.

Un objet de l'invention est de proposer une sculpture de bande de roulement pour pneu qui tout en réduisant de façon sensible les bruits liés aux résonances des colonnes d'air dans les rainures circonférentielles ne perturbe pas l'écoulement de liquide.

Dans ce but, le pneu selon l'invention est pourvu d'une bande de roulement comprenant au moins deux rainures d'orientation générale circonférentielle et une pluralité de rainures transversales d'orientation générale transversale, , au moins une pluralité de rainures transversales débouchant par des ouvertures dans ces deux rainures circonférentielles, les rainures circonférentielles et transversales ayant des sections transversales appropriées pour permettre, au cours d'un roulage, un écoulement de liquide présent sur la chaussée, une de ces rainures circonférentielles comprenant une pluralité de dispositifs de fermeture et l'autre de ces rainures circonférentielles étant totalement dépourvue de tout dispositif de fermeture, chaque dispositif de fermeture fermant au moins en partie la section transversale d'une rainure circonférentielle, chaque dispositif de fermeture étant approprié pour fléchir et ouvrir la section de la rainure circonférentielle dans laquelle il est placé uniquement sous l'action d'un écoulement de liquide lors d'un roulage sur chaussée revêtue d'eau, ce pneu comprenant une pluralité de résonateurs pour atténuer le bruit généré dans une rainure circonférentielle, chaque résonateur étant formé dans au moins une rainure transversale et comporte une ouverture sur une rainure circonférentielle, ce pneu étant caractérisé en ce que les dispositifs de fermeture sont disposés de manière à être placés dans une même rainure circonférentielle circonférentiellement de part et d'autre d'une première ouverture d'une rainure transversale, de façon à délimiter avec ladite rainure transversale un résonateur de longueur **LR** comprise entre la moitié et les trois quarts de la longueur de rainure circonférentielle dans le contact mesurée sous condition nominale de charge et pression, cette longueur **LR** étant prise entre l'un des dispositifs de fermeture et l'ouverture de ladite rainure transversale s'ouvrant dans la rainure circonférentielle dépourvue de dispositifs de fermeture.

Grâce à cette bande de roulement et à la présence de dispositifs de fermeture aptes à créer une longueur de rainure ouverte à une seule extrémité dans une rainure circonférentielle, il est possible de créer une pluralité de résonateurs d'un quart d'onde ou de résonateurs de Helmholtz pour atténuer le bruit de résonance de l'air circulant dans ladite rainure circonférentielle. La longueur du résonateur quart d'onde **LR** est obtenue en multipliant la longueur de la rainure circonférentielle dans le contact par un coefficient au moins égal à 0.5 et au plus égal à 0.75. Cette bande de roulement conserve toutes les performances d'une bande sans dispositifs de fermeture des rainures lors d'un roulage sur chaussée revêtue d'eau puisque les dispositifs de fermeture sont adaptés pour fléchir sous la pression de l'eau circulant dans les rainures, cette flexion permettant de retrouver une grande partie de la section totale des rainures.

Pour obtenir une performance satisfaisante il est judicieux que chaque dispositif de fermeture occupe au moins 50% de la section transversale de la rainure dans laquelle il est placé, et encore plus préférentiellement 70% de ladite section.

Dans une autre forme préférentielle de réalisation, au moins deux dispositifs de fermeture sont placés dans une même rainure circonférentielle, ces deux dispositifs étant situés circonférentiellement de part et d'autre d'une extrémité (ouverture) d'une rainure transversale, de façon à délimiter avec ladite rainure transversale une longueur de rainure LR entre l'un des dispositifs de fermeture et l'autre extrémité (ouverture) de ladite rainure transversale pour former un résonateur.

Bien entendu la personne du métier peut combiner les deux formes préférentielles énoncées aux paragraphes précédents en plaçant des dispositifs de fermeture à la fois dans des rainures transversales et dans des rainures circonférentielles.

D'autres caractéristiques et avantages de l'invention ressortent de la description faite ci-après en référence aux dessins annexés qui montrent, à titre d'exemples non limitatifs, des formes de réalisation de l'objet de l'invention.
La figure 1A montre une vue partielle en plan d'une première variante d'une bande de roulement selon l'art antérieur ;
La figure 1B montre une vue partielle en plan de la même bande de roulement que celle montrée sur la figure 1A lors d'un roulage sur chaussée revêtue d'eau ;
La figure 2A montre une vue partielle en coupe selon la ligne II-II prise sur la figure 1A ;
La figure 2B montre une vue partielle en coupe selon la ligne II-II prise sur la figure 1B ;
La figure 3 montre une autre variante de bande de roulement selon l'art antérieur ;
La figure 4 montre une première variante de bande de roulement selon l'invention ;
La figure 5 montre une deuxième variante de bande de roulement selon l'invention ;
La figure 6 montre une variante de bande de roulement selon l'art antérieur ;
La figure 7 montre une comparaison des signaux de bruit calculés pour un pneu de référence et un pneu selon l'invention ;
La figure 8 montre le dessin de la bande de roulement du pneu selon l'invention pour lequel les signaux de bruit ont été calculés et montrés à la figure 7.

Pour faciliter la lecture des figures et de la description associée, les mêmes références sont employées dans les dessins pour désigner des éléments structurels ou fonctionnels identiques quelle que soit la variante considérée.

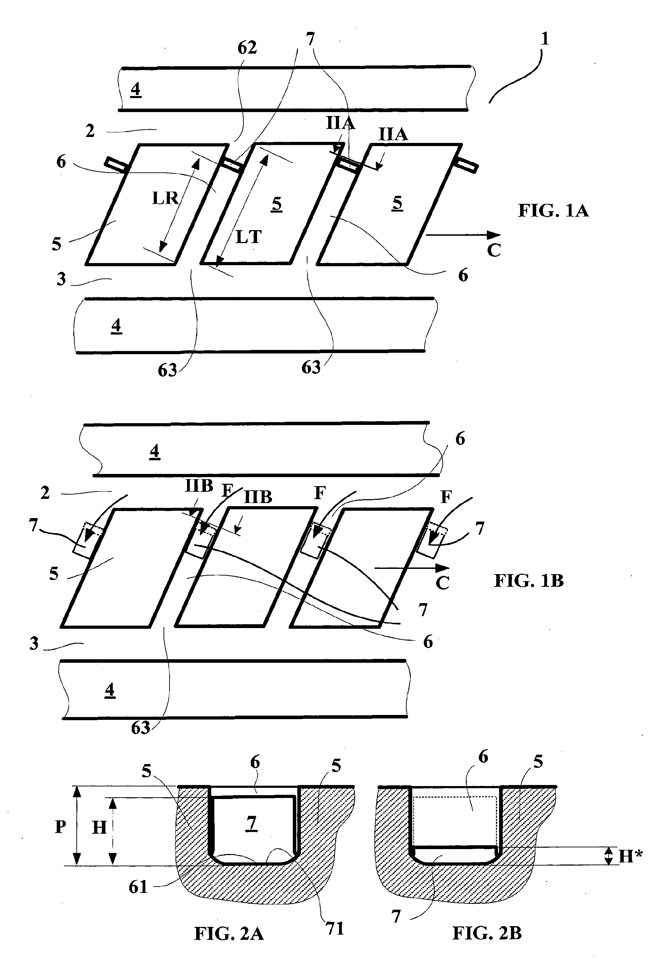

Les figures 1A et 1B montrent vue de la surface de roulement d'une partie d'une variante de bande de roulement 1 selon l'art antérieur destinée à équiper un pneu pour véhicule de tourisme. Ce pneu est de dimension 255/40 R 19. Sur ces vues, on distingue deux rainures circonférentielles 2, 3 délimitées chacune par une nervure 4 continue circonférentiellement et une rangée de blocs 5. Les blocs 5 sont séparés circonférentiellement les uns des autres par des rainures transversales 6 obliques, c'est-à-dire faisant un angle différent de zéro avec la direction circonférentielle repérée par la direction C sur les figures.

Les rainures circonférentielles 2, 3 ont une largeur moyenne de 10 mm et une profondeur de 8 mm. Les rainures transversales 6 une largeur moyenne de 3 mm et une profondeur de 7 mm.

Chaque rainure transversale 5 débouche dans les deux rainures circonférentielles 2, 3 par deux extrémités (ou ouvertures) respectivement 62, 63.

On distingue dans chaque rainure transversale 6, une lame 7 jouant le rôle d'un dispositif de fermeture placé sensiblement près de l'extrémité 62 de ladite rainure transversale débouchant dans la rainure longitudinale 2, ce dispositif ayant pour fonction de délimiter une longueur LR de rainure jusqu'à l'autre extrémité 63 de la même rainure transversale. Les rainures transversales 6 sont donc de longueur LT supérieure à la longueur LR. Dans le cas présent, la longueur LT est égale à 80 mm et la longueur LR est égale à 70 mm.

Sous les conditions d'usage nominales à savoir une pression de gonflage de 2.5 bars et une charge supportée de 670 daN, la longueur moyenne de rainure circonférentielle est de 120 mm.

Sur la figure 1A on distingue les dispositifs de fermeture dans une position relevée empêchant la circulation d'air dans les rainures transversales 6 : ce dispositif de fermeture est visible sur la figure 2A qui montre en coupe, selon la ligne IIA-IIA la rainure transversale 6 au voisinage de ce dispositif. Sur cette figure 2A, on voit que ce dispositif de fermeture est formé par une lame 7 de matière caoutchoutique flexible liée par sa base 71 au fond de la rainure transversale 61 et s'étendant sur une hauteur H égale dans le cas présent à 90% de la profondeur P de la rainure transversale. En outre cette lame 7 occupe sensiblement toute la largeur de la rainure transversale 6, à un jeu près permettant la flexion de cette lame 7 dans la rainure transversale comme cela est représenté à la figure 2B. Dans le cas d'espèce une lame 7 occupe près de 80% de la section transversale de la rainure 6.

Dans une configuration de roulage sur sol sec, seule une circulation d'air sous faible pression existe à l'intérieur des rainures longitudinales et cette faible pression n'est pas suffisante pour faire fléchir les lames. Ainsi il est possible de créer une cavité ayant une longueur appropriée pour servir de résonateur afin d'atténuer le bruit de résonance de l'air circulant dans ladite rainure circonférentielle. La longueur **LR** de ce résonateur est déterminée en fonction de la longueur dans le contact de la rainure longitudinale dans laquelle ce résonateur débouche.

La figure 1B montre la même partie de bande de roulement lors d'un roulage sur sol revêtu d'eau : dans cette configuration, la pression de l'eau est suffisante pour faire fléchir les lames 7 dans les rainures transversales. Les flèches F indiquent le flux d'eau qui peut passer dans les rainures transversales 6.

La figure 2B montre une coupe selon la ligne IIB-IIB de la même rainure transversale 6 lorsque le pneu roule sur sol revêtu d'eau (cette représentation correspond au passage dans le contact avec le sol). Dans cette configuration, la pression exercée par l'eau qui s'écoule dans les rainures longitudinales 2, 3 et qui parvient dans les rainures transversales 6 est suffisante pour faire fléchir les lames 7 flexibles. La section utile de rainure pour permettre l'écoulement de l'eau augmente très sensiblement dans cette configuration (en traits pointillés on montre la lame dans sa position non fléchie). Ainsi l'eau pouvant s'écouler dans toutes les rainures y compris les rainures transversales, il est possible de maintenir des performances de roulage sur sol revêtu d'eau à un niveau satisfaisant pour l'usager. Grâce à l'élasticité et à la flexibilité de la lame et de sa matière la composant, lorsque la pression est inférieure à une limite donnée (correspondant au retour à un roulage sur sol sec) les dispositifs de fermeture reprennent leur position initiale et viennent fermer les rainures transversales.

Chaque lame de matière 7 est moulée avec le pneu et a une épaisseur appropriée pour fléchir sous l'action de l'écoulement de l'eau en roulage sur chaussée revêtue d'eau. Par ailleurs, ces lames 7 sont fixées par leur base 71 au fond 61 des rainures transversales 6 et s'étendent vers l'extérieur en suivant de près les parois des blocs afin de fermer le plus possible la rainure transversale. Pour un pneu destiné à un véhicule de tourisme, l'épaisseur de chaque lame est comprise entre 0,1 mm et 2,0 mm, limites comprises. Préférentiellement le pourcentage de fermeture d'une rainure par chaque lame est d'au moins 50% de l'aire de la section de la rainure et encore plus préférentiellement d'au moins 70%.

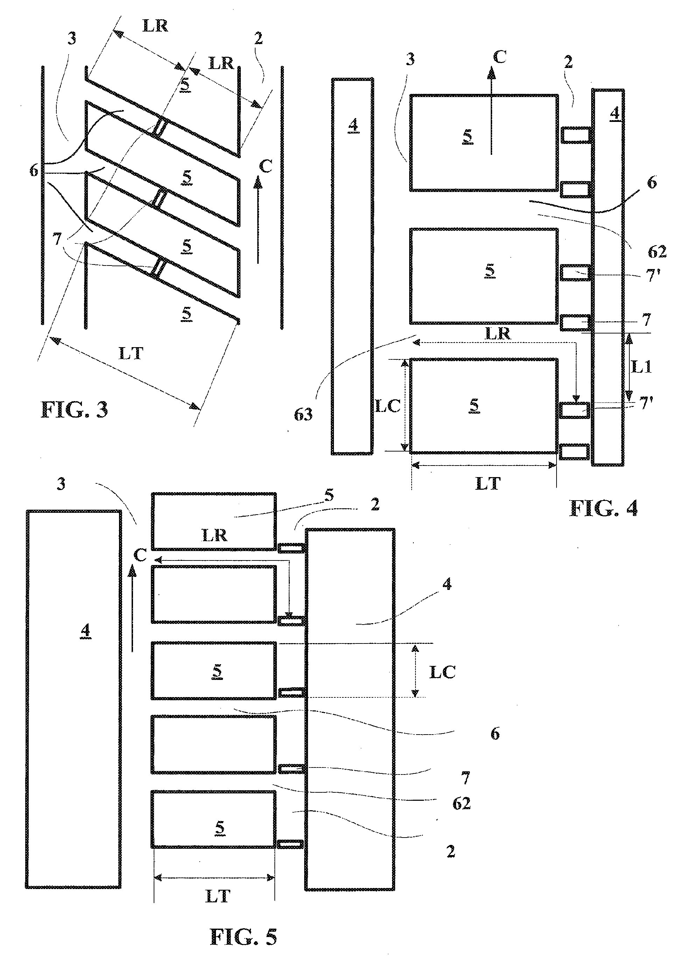

La figure 3 montre une variante d'une bande de roulement selon l'art antérieur selon laquelle les lames 7 formant des dispositifs de fermeture sont placées sensiblement au milieu des rainures transversales 6 obliques et faisant un angle de 45° avec la direction circonférentielle C, chaque lame 7 délimitant une longueur **LR** de rainure avec chaque extrémité 62, 63 de la rainure transversale dans laquelle il est placé. Les rainures transversales 6 sont donc de longueur **LT** égale à deux fois **LR.** Comme dans l'exemple précédent (et pour tous les autres exemples donnés ici) la longueur **LR** est déterminée en fonction de la longueur de la rainure circonférentielle dans la région de contact avec le sol afin d'obtenir un effet de résonateur pour cette rainure circonférentielle.

Les résonateurs ainsi créés sont actifs pour les deux rainures circonférentielles de part et d'autre des blocs.

La figure 4 montre une première variante de l'invention. Dans cette variante, une rangée de blocs 5 séparés les uns des autres dans la direction circonférentielle C par des rainures transversales 6 est bordée axialement de part et d'autre par une première rainure circonférentielle 2 et une seconde rainure circonférentielle 3.

Selon cette variante chaque dispositif de fermeture pour former un résonateur est composé d'une première lame 7 et d'une deuxième lame 7', ces deux lames étant placées dans une même rainure circonférentielle 2. Dans ce cas, on place la première lame 7 près de l'une des extrémités 62 d'une rainure transversale 6, cette première lame n'obstruant pas ladite rainure transversale et la deuxième lame 7' dans la même rainure circonférentielle 2 à une distance **L1** de la première lame 7, cette distance **L1** étant déterminée de manière que la somme des longueurs **L1** et de la longueur **LT** de la rainure transversale 6 soit égale à la longueur **LR** approprié du résonateur servant à atténuer le bruit de résonance de la seconde rainure circonférentielle 3 disposée axialement de l'autre côté par rapport à la rangée de blocs 5. Bien entendu, dans cette variante la dimension circonférentielle des blocs 5 doit être appropriée pour créer un espace suffisant entre les deux lames 7, 7' afin de permettre la flexion de ces lames lors d'un roulage sur sol revêtu d'eau.

La deuxième variante représentée à la figure 5 est sensiblement équivalente à la première variante de la figure 4 : la différence réside dans le fait que la longueur circonférentielle **LC** des blocs 5 est telle que la somme des dimensions transversale **LT** et circonférentielle **LC** d'un bloc soit égale à la longueur **LR** du résonateur pour une rainure circonférentielle. Dans cette quatrième variante, chaque lame 7 est placée dans la rainure 2 de manière à être dans le prolongement d'une paroi limitant une rainure transversale. Une même lame 7 participe à la formation de deux résonateurs.

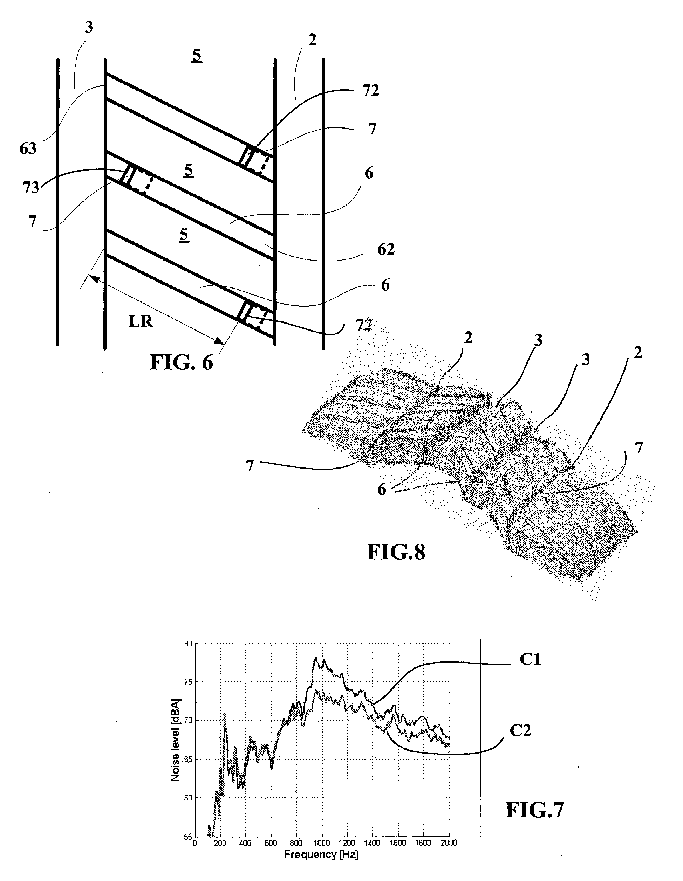

La figure 6 montre une variante de l'art antérieur selon laquelle pour atténuer le bruit de résonance de deux rainures circonférentielles 2, 3 situées de part et d'autre d'une rangée de blocs 5 séparés les uns des autres par des rainures transversales 6, on place des lames 7 dans les rainures transversales 6 afin que lesdites lames 7 soient efficaces pour une rainure circonférentielle ou pour une autre. Une lame 72 est placée dans une rainure transversale 6 près d'une extrémité 62 de ladite rainure 6 débouchant dans la rainure circonférentielle 2. une lame 73 est placée près d'une autre extrémité 63 débouchant dans la rainure circonférentielle 3. La lame 72 placée près de l'extrémité 62 délimite une longueur **LR** de résonateur atténuant le bruit de résonance dans la rainure circonférentielle 3. La lame 73 placée près de l'extrémité 63 délimite une longueur **LR** de résonateur atténuant le bruit de résonance dans la rainure circonférentielle 2. Sur cette figure 6, les lames 72 et 73 sont représentées en traits pleins dans la configuration de fermeture des rainures et en traits pointillés dans la configuration d'ouverture des rainures sous l'action de l'écoulement d'eau lors d'un roulage sur sol revêtu d'eau.

La figure 7 représente une comparaison du bruit émis par un pneu de référence et un pneu selon l'invention ayant le même dessin de bande de roulement que le pneu de référence et pourvu d'une pluralité de dispositifs atténuateur de bruit de résonance dans les rainures circonférentielles dont le dessin de sculpture est montré avec la figure 8. Sur cette figure 8, on distingue que la bande de roulement est pourvue de deux rainures circonférentielles 3 dans la partie médiane et d'une rainure circonférentielle 2 entre chaque rainure 3 de la partie médiane et la partie la plus à l'extérieur de la bande de roulement. Chaque paire de rainures circonférentielles délimite une rangée elle-même pourvue de rainures obliques 6. Les rainures circonférentielles 2 sont pourvues avec des lames 7 jouant le rôle de dispositif de fermeture des rainures circonférentielles 2 et formant avec chaque rainure oblique un résonateur pour atténuer le bruit en roulage sur chaussée sèche (la disposition des lames 7 est similaire à celle montrée avec la variante de la figure 5). On constate une réduction du bruit global émis de l'ordre de 2.3 dBA entre le pneu selon l'invention (100.3 dBA) et le pneu de référence (102.6 dBA). On note sur la figure 7 montrant les enregistrements de bruit émis (en abscisse on porte la fréquence en Hz et en ordonnée le niveau de bruit en dBA) une atténuation sensible entre le pneu de référence (courbe C1) et le pneu selon l'invention (courbe C2) des niveaux pour les fréquences supérieures à 800 Hz. De manière générale, les lames jouant le rôle de dispositif de fermeture peuvent être moulées dans une matière analogue à celle de la bande de roulement au moment du moulage de ladite bande ou dans une autre matière pouvant être rapportée sur la bande pendant ou après sa confection.

L'invention n'est pas limitée aux exemples décrits et représentés et diverses modifications peuvent y être apportées sans sortir de son cadre tel que défini par les revendications.

## Revendications

1. Pneu ayant une bande de roulement (1) comprenant au moins deux rainures (2, 3) d'orientation générale circonférentielle, une pluralité de rainures transversales (6), au moins une pluralité de rainures transversales débouchant par des ouvertures (62, 63) dans ces deux rainures circonférentielles, les rainures circonférentielles et transversales ayant des sections transversales appropriées pour permettre, au cours d'un roulage, un écoulement de liquide présent sur la chaussée, une de ces rainures circonférentielles comprenant une pluralité de dispositifs de fermeture (7) et l'autre de ces rainures circonférentielles étant totalement dépourvue de tout dispositif de fermeture, chaque dispositif de fermeture (7) fermant au moins en partie la section transversale d'une rainure circonférentielle, chaque dispositif de fermeture (7) étant approprié pour fléchir et ouvrir la section de la rainure circonférentielle dans laquelle il est placé uniquement sous l'action d'un écoulement de liquide lors d'un roulage sur chaussée revêtue d'eau, ce pneu comprenant une pluralité de résonateurs pour atténuer le bruit généré dans une rainure circonférentielle, chaque résonateur étant formé dans au moins une rainure transversale et comporte une ouverture sur une rainure circonférentielle, **ce pneu étant caractérisé en ce que** les dispositifs de fermeture (7) sont disposés de manière à être placés dans une même rainure circonférentielle (2, 3) circonférentiellement de part et d'autre d'une première ouverture (62, 63) d'une rainure transversale, de façon à délimiter avec ladite rainure transversale un résonateur de longueur **LR** comprise entre la moitié et les trois quarts de la longueur de rainure circonférentielle dans le contact mesurée sous condition nominale de charge et pression, cette longueur **LR** étant prise entre l'un des dispositifs de fermeture et l'ouverture de ladite rainure transversale s'ouvrant dans la rainure circonférentielle dépourvue de dispositifs de fermeture.

2. Pneu selon la revendication 1 **caractérisé en ce que** entre deux ouvertures consécutives de rainures transversales dans la rainure circonférentielle pourvue avec des dispositifs de fermeture, il est formé deux dispositifs de fermeture.

3. Pneu selon la revendication 1 **caractérisé en ce que** entre deux ouvertures consécutives de rainures transversales dans la rainure circonférentielle pourvue avec des dispositifs de fermeture, il est formé un seul dispositif de fermeture.

4. Pneu selon l'une des revendications 1 à 3 **caractérisé en ce que** chaque dispositif de fermeture (7) occupe au moins 70% de la section transversale de la rainure dans laquelle il est placé.

5. Pneu selon l'une des revendications 1 à 4 **caractérisé en ce que** chaque dispositif de fermeture (7) est formé par une lame en matériau flexible d'épaisseur appropriée pour permettre par flexion l'ouverture de la section de la rainure dans laquelle il est placé, ladite lame étant fixée à sa base (71) au fond d'une rainure.

6. Pneu selon l'une des revendications 1 à 4 **caractérisé en ce que** chaque dispositif de fermeture (7) est formé par deux lames en matériau flexible, chaque lame étant fixée à une paroi délimitant une rainure.

7. Pneu selon la revendication 5 ou la revendication 6 **caractérisé en ce que** chaque lame s'étend à partir du fond de la rainure sur une hauteur au moins égale à 50% de la profondeur P de la rainure transversale.

8. Pneu selon la revendication 7 **caractérisé en ce que** chaque lame s'étend à partir du fond de la rainure sur une hauteur au moins égale à 70% de la profondeur P de la rainure transversale.

## Patentansprüche

1. Reifen mit einem Laufstreifen (1), der mindestens zwei Rillen (2, 3) mit allgemeiner Umfangsausrichtung und eine Vielzahl von Querrillen (6) hat, wobei mindestens eine Vielzahl von Querrillen über Öffnungen (62, 63) in diese zwei Umfangsrillen mündet, wobei die Umfangs- und Querrillen geeignete Querschnitte haben, um während des Fahrens einen Ablauf von auf der Straße vorhandener Flüssigkeit zu erlauben, wobei eine dieser Umfangsrillen eine Vielzahl von Schließvorrichtungen (7) enthält, und die andere dieser Umfangsrillen völlig frei von Schließvorrichtungen ist, wobei jede Schließvorrichtung (7) zumindest zum Teil den Querschnitt einer Umfangsrille verschließt, wobei jede Schließvorrichtung (7) geeignet ist, sich nur unter der Wirkung eines Flüssigkeitsablaufs beim Fahren auf einer mit Wasser bedeckten Straße zu biegen und den Querschnitt der Umfangsrille zu öffnen, in der sie angeordnet ist, wobei dieser Reifen eine Vielzahl von Resonatoren enthält, um das in einer Umfangsrille erzeugte Geräusch zu dämpfen, wobei jeder Resonator in mindestens einer Querrille geformt ist und eine Öffnung auf eine Umfangsrille aufweist, wobei dieser Reifen **dadurch gekennzeichnet ist, dass** die Schließvorrichtungen (7) so angeordnet sind, dass sie in einer gleichen Umfangsrille (2, 3) in Umfangsrichtung zu beiden Seiten einer ersten Öffnung (62, 63) einer Querrille angeordnet sind, um mit der Querrille einen Resonator einer Länge LR zu begrenzen, die zwischen der Hälfte und Dreiviertel der Umfangsrillenlänge im Kontakt gemessen unter nominaler Last- und Druckbedingung liegt, wobei diese Länge LR zwischen einer der Schließvorrichtungen und der Öffnung der Querrille genommen wird, die sich in die Umfangsrille ohne Schließvorrichtungen öffnet.

2. Reifen nach Anspruch 1, **dadurch gekennzeichnet, dass** zwischen zwei aufeinanderfolgenden Öffnungen von Querrillen in die mit Schließvorrichtungen versehene Umfangsrille zwei Schließvorrichtungen geformt sind.

3. Reifen nach Anspruch 1, **dadurch gekennzeichnet, dass** zwischen zwei aufeinanderfolgenden Öffnungen von Querrillen in die mit Schließvorrichtungen versehene Umfangsrille eine einzige Schließvorrichtung geformt ist.

4. Reifen nach einem der Ansprüche 1 bis 3, **dadurch gekennzeichnet, dass** jede Schließvorrichtung (7) mindestens 70% des Querschnitts der Rille einnimmt, in der sie angeordnet ist.

5. Reifen nach einem der Ansprüche 1 bis 4, **dadurch gekennzeichnet, dass** jede Schließvorrichtung (7) von einer Lamelle aus einem flexiblen Material geeigneter Dicke geformt wird, um durch Biegung die Öffnung des Querschnitts der Rille zu erlauben, in der sie angeordnet ist, wobei die Lamelle an ihrer Basis (71) am Boden einer Rille befestigt ist.

6. Reifen nach einem der Ansprüche 1 bis 4, **dadurch gekennzeichnet, dass** jede Schließvorrichtung (7) von zwei Lamellen aus flexiblem Material geformt wird, wobei jede Lamelle an einer eine Rille begrenzenden Wand befestigt ist.

7. Reifen nach Anspruch 5 oder Anspruch 6, **dadurch gekennzeichnet, dass** jede Lamelle sich ausgehend vom Boden der Rille über eine Höhe mindestens gleich 50% der Tiefe P der Querrille erstreckt.

8. Reifen nach Anspruch 7, **dadurch gekennzeichnet, dass** jede Lamelle sich ausgehend vom Boden der Rille über eine Höhe mindestens gleich 70% der Tiefe P der Querrille erstreckt.

## Claims

1. Tyre having a tread (1) comprising at least two grooves (2, 3) of generally circumferential orientation, a plurality of transverse grooves (6), at least one plurality of transverse grooves culminating in openings (62, 63) into these two circumferential grooves, the circumferential and transverse grooves having appropriate cross sections for allowing, when running, a flow of liquid present on the road surface, one of these circumferential grooves comprising a plurality of closing devices (7) and the other circumferential groove being totally devoid of any closing device,, each closing device (7) closing at least partly the cross section of a circumferential groove, each closing device (7) being appropriate for flexing and opening the section of the circumferential groove in which it is placed only under the action of a flow of liquid when running on a water-covered road surface, this tyre comprising a plurality of resonators for attenuating the noise generated in a circumferential groove, this tyre being **characterized in that** these closing devices (7) are arranged in a same circumferential groove (2, 3) circumferentially on each side of a first opening (62, 63) of a transverse groove, so as to delimit with said transverse groove a resonator having a length LR of between half and three-quarters of the length of circumferential groove in contact, the length measured under nominal conditions of load and pressure, this length LR being taken between one closing device and the opening of said transverse groove opening onto the circumferential groove devoid of any closing devices.

2. Tyre according to Claim 1, **characterized in that** between two consecutive openings of transverse grooves onto the circumferential groove provided with closing devices, two closing devices are formed.

3. Tyre according to Claim 1, **characterized in that** between two consecutive openings of transverse grooves onto the circumferential groove provided with closing devices, one closing device is formed.

4. Tyre according to any of Claims 1 to 3, **characterized in that** each closing device (7) occupies at least 70% of the cross section of the groove in which it is placed.

5. Tyre according to one of Claims 1 to 4, **characterized in that** each closing device (7) is formed by a strip made of flexible material of appropriate thickness to allow by flexing the opening of the section of the groove in which it is placed, the said strip being fixed at its base (71) to the bottom of a groove.

6. Tyre according to one of Claims 1 to 4, **characterized in that** each closing device (7) is formed by two strips made of flexible material, each strip being fixed to a wall delimiting a groove.

7. Tyre according to Claim 5 or Claim 6, **characterized in that** each strip extends from the bottom of the groove over a height at least equal to 50% of the depth P of the transverse groove.

8. Tyre according to Claim 7, **characterized in that** each strip extends from the bottom of the groove over a height at least equal to 70% of the depth P of the transverse groove.
